# DEMANDE DE BREVET EUROPEEN

(11) **EP 4 095 842 A1**
(43) Date de publication de la demande: **30.11.2022**
(21) Numéro de dépôt: 22175226.4
(22) Date de dépôt: 24.05.2022
(51) Int. Cl.: G09G 3/32, G09G 3/3258, G09G 3/20, G06F 3/14

(54) **DISPOSITIF D'AFFICHAGE A ADRESSAGE PAR GROUPES DE PIXELS**

(30) Priorité: 26.05.2021 FR 2105468
(71) Demandeur: Commissariat à l'énergie atomique et aux énergies alternatives, 75015 Paris (FR)
(72) Inventeur: MAINGUET, Jean-François, 38054 Grenoble Cedex 09 (FR)
(74) Mandataire: Brevalex

(57) **Abrégé**

Dispositif d'affichage (100) comportant :
- une matrice de pixels (102) comprenant plusieurs groupes de pixels (104), chaque groupe comprenant plusieurs blocs de pixels (106) ;
- une carte vidéo (108) comprenant une entrée (109) configurée pour recevoir un signal numérique à afficher, et plusieurs sorties (111) chacune couplée à un groupe par un réseau de distribution de données principal (112) associé, la carte vidéo étant configurée pour décoder le signal numérique et envoyer sur chacune des sorties des données numériques encodées dans un format adapté à la matrice et destinées à être affichées par le groupe couplé à ladite sortie (111) ;
et dans lequel :
- chaque groupe comporte plusieurs circuits de contrôle (110) chacun associé à un bloc du groupe et couplé au bus de données principal associé ;
- chaque pixel comporte un circuit de pilotage configuré pour générer des signaux de commande du pixel.

## Description

### DOMAINE TECHNIQUE

L'invention concerne le domaine des dispositifs d'affichage à matrice de pixels. L'invention s'applique avantageusement à la réalisation d'écrans de grandes dimensions.

### ÉTAT DE LA TECHNIQUE ANTÉRIEURE

Classiquement, un dispositif d'affichage tel qu'un écran de télévision ou un écran d'ordinateur reçoit un signal vidéo à travers un câble vidéo, par exemple un câble HDMI. Le signal vidéo correspond à un signal numérique codant, sans compression, des valeurs de luminosité à afficher par chaque pixel du dispositif (généralement au moins trois valeurs pour chaque pixel, c'est-à-dire une pour chaque couleur, dans le cas de pixels RVB). Ce signal vidéo est par exemple calculé par une carte graphique.

Le signal vidéo reçu par le dispositif d'affichage est en pratique réceptionné par une carte vidéo qui réalise différentes opérations de décodage, de conversion et de distribution de données à destination d'une matrice de pixels du dispositif d'affichage. La carte vidéo peut réaliser tout ou partie d'une conversion numérique-analogique des données destinées à la matrice de pixels. Dans le cas le plus fréquent où la conversion numérique-analogique est réalisée dans la carte vidéo, celle-ci délivre des valeurs analogiques affichables par la matrice de pixels. Dans le cas où la carte vidéo envoie des valeurs numériques aux pixels, la carte vidéo doit assurer la génération d'un ensemble de signaux de contrôle des pixels afin de commander le temps d'affichage de chaque pixel, par exemple avec des signaux de commande de modulation PWM (modulation de largeur d'impulsion) ou BCM (modulation codée binaire). Dans ces exemples de signaux de contrôle des pixels, il n'y a pas de conversion numérique-analogique dans la mesure où chaque pixel est commandé en « tout ou rien » (en anglais « On/Off »), ou autrement dit « émet / n'émet pas ».

Chaque pixel du dispositif d'affichage comprend généralement plusieurs éléments lumineux permettant l'affichage d'un pixel de chacune des images à afficher par le dispositif. Un pixel comporte généralement au moins trois éléments lumineux modulables en intensité et chacun dédié à l'une des couleurs rouge, vert et bleu. Chaque élément lumineux peut comporter soit un émetteur de lumière modulable en intensité directement dans la couleur cible de cet élément (cas de l'OLED) ou composé d'une source de lumière bleue qui est filtrée et/ou additionnée de phosphores pour obtenir la couleur cible (cas d'autres types de LED), soit un modulateur lumineux (cas des cristaux liquides) couplé à un filtre coloré adéquat pour obtenir, à partir d'une lumière blanche émise par une source commune aux pixels, la couleur cible.

Les valeurs analogiques obtenues après conversion numérique-analogique ou les durées d'émission pour chaque pixel sont proportionnelles aux niveaux d'intensité lumineuse à afficher par chacun des éléments lumineux des pixels. Chaque élément lumineux peut être couplé à un transistor de sélection permettant de commander l'affichage du signal lumineux par l'élément lumineux. Le dispositif d'affichage comporte également des circuits d'attaque de ligne (« row driver » en anglais) commandant les transistors de sélection, et des circuits d'attaque de colonnes (« column driver » en anglais) envoyant aux pixels les valeurs correspondant aux données à afficher.

L'augmentation de la résolution des dispositifs d'affichage se traduit par une augmentation du nombre de lignes et de colonnes de la matrice de pixels du dispositif (7680 colonnes et 4320 lignes dans le format 8K), qui a pour conséquence de multiplier le nombre de puces électroniques (formant notamment les circuits d'attaque de ligne et de colonne) autour de la matrice de pixels, ainsi que le nombre de fils nécessaires pour adresser les éléments lumineux des pixels.

De plus, dans le cas d'un dispositif permettant l'affichage de vidéos ou d'images 3D, c'est-à-dire d'affichage en multiscopie, le nombre d'informations envoyées pour chaque pixel est encore plus important compte tenu de la multitude de points de vue de l'image à afficher par le dispositif, ce qui nécessite une multiplication du nombre d'éléments lumineux par pixel, et donc un plus grand nombre de fils nécessaires pour adresser les éléments lumineux des pixels. L'énergie requise pour les éléments lumineux et qui est à transmettre aux pixels est également importante.

### EXPOSÉ DE L'INVENTION

Un but de la présente invention est de proposer un dispositif d'affichage dont l'architecture permette de réduire la complexité du câblage et le nombre de fils nécessaires pour adresser les éléments lumineux des pixels du dispositif d'affichage.

Pour cela, la présente invention propose un dispositif d'affichage comportant au moins :
- une matrice de pixels comprenant plusieurs groupes de pixels, chaque groupe de pixels comprenant plusieurs blocs de pixels chacun incluant plusieurs pixels répartis sur plusieurs lignes de pixels voisines, ou consécutives ou adjacentes, et sur plusieurs colonnes de pixels voisines, ou consécutives ou adjacentes, et chaque pixel comprenant au moins un élément lumineux ;
- une carte vidéo comprenant au moins une entrée configurée pour recevoir un signal numérique à afficher par la matrice de pixels, et plusieurs sorties chacune couplée à un groupe de pixels par un réseau de distribution, ou bus, de données principal associé, la carte vidéo étant configurée pour décoder le signal numérique et envoyer sur chacune des sorties des données numériques encodées dans un format adapté à la matrice de pixels et destinées à être affichées par le groupe de pixels couplé à ladite sortie ;
et dans lequel :
- chaque groupe de pixels comporte plusieurs circuits de contrôle chacun associé à un bloc de pixels du groupe de pixels et couplé au réseau de distribution de données principal associé, chaque circuit de contrôle comportant un circuit mémoire principal configuré pour stocker une partie des données numériques destinée à être affichée par le bloc de pixels associé et étant configuré pour envoyer au bloc de pixels associé, par un réseau de distribution de données secondaire associé, ladite partie des données numériques destinée à être affichée par le bloc de pixels associé ;
- chaque pixel comporte au moins un circuit de pilotage configuré pour générer des signaux de commande du ou des éléments lumineux du pixel à partir de données numériques destinées à être affichées par le ou les éléments lumineux du pixel.

Ce dispositif d'affichage propose de remplacer l'adressage classique lignes / colonnes par un adressage par groupes de pixels eux-mêmes divisés en blocs de pixels. Cela est rendu possible grâce à l'utilisation de circuits électroniques au sein de la matrice de pixels, à savoir les circuits de contrôle associés aux blocs de pixels et les circuits de pilotage configurés pour générer les signaux de commande du ou des éléments lumineux du pixel formés au sein de chaque pixel. Grâce à cette configuration rendant possible le regroupement de certaines opérations réalisées auparavant (dans l'art antérieur) en dehors de la matrice de pixels, le câblage nécessaire pour adresser les éléments lumineux des pixels est simplifié et nécessite moins de fils, les puces électroniques en périphérie sont éliminées et le câblage des lignes ou des colonnes peut disparaitre, ce qui rend cette configuration particulièrement avantageuse pour la réalisation d'écrans de grandes dimensions.

En outre, avec un tel dispositif, il est possible d'adresser en parallèle les différents groupes de pixels, ce qui permet d'éviter d'avoir à adresser successivement chaque ligne de pixels de la matrice.

Une différence majeure entre un dispositif d'affichage classique et le dispositif d'affichage de l'invention est que les données envoyées aux pixels sont ici numériques, et la génération des signaux de commande des éléments lumineux des pixels est réalisée au sein de chaque pixel.

La division de la matrice en groupe de pixels et la réalisation de certaines fonctions au sein de la matrice de pixels permet de limiter le débit des données à envoyer aux pixels, rendant ainsi ces transferts plus facile à réaliser.

La carte vidéo, pouvant également être appelée carte de pilotage, du dispositif d'affichage peut recevoir les données numériques depuis l'extérieur du dispositif d'affichage par exemple via un câble tel qu'un câble HDMI. La carte vidéo ne correspond pas à une carte graphique dont le rôle est de définir et envoyer les données numériques d'images complètes au dispositif d'affichage.

La carte vidéo correspond à une carte électronique comportant un ou plusieurs circuits intégrés et qui est dédiée au pilotage de la matrice de pixels. La carte vidéo réalise, à partir du signal numérique reçu en entrée, différentes opérations de décodage, de conversion et de distribution de données à destination de la matrice de pixels. Dans le dispositif d'affichage selon l'invention, la carte vidéo ne réalise pas la conversion numérique-analogique des données destinées à la matrice de pixels. La carte vidéo peut assurer la génération d'un ensemble de signaux de contrôle des pixels afin de commander la transformation numérique-analogique dans les pixels, par exemple avec des signaux de commande de modulation PWM (modulation de largeur d'impulsion) ou BCM (modulation codée binaire). De plus, la carte vidéo peut ne comporter que des circuits intégrés numériques, ce qui facilite sa réalisation.

La carte vidéo est configurée pour réaliser un décodage du signal numérique reçu, puis un nouvel encodage des données numériques obtenues selon un format adapté à la matrice de pixels, c'est-à-dire, pour les données numériques destinées à chaque groupe de pixels, dans un format adapté aux circuits de contrôle, au type de pixels et aux éléments servant à la distribution de ces données dans le groupe de pixels.

Les signaux de commande des éléments lumineux des pixels commandent, à chacun des éléments lumineux des pixels, l'affichage d'une certaine valeur de luminosité pendant une période de référence d'affichage correspondant à la durée d'affichage d'une image par la matrice de pixels.

Un réseau de distribution de données comprend au moins des connexions électriques, de préférence partagées, entre un circuit émetteur et plusieurs circuits récepteurs. Cette définition concerne autant les réseaux de distribution de données principaux que les réseaux de distribution de données secondaires.

Chaque réseau de distribution de données principal sert à la distribution des données depuis l'une des sorties de la carte vidéo jusqu'aux circuits de contrôle du groupe de pixels couplé à ladite sortie de la carte vidéo.

Chaque réseau de distribution de données secondaire sert à la distribution des données depuis l'un des circuits de contrôle jusqu'aux pixels du bloc de pixels associé au dit circuit de contrôle.

Dans la présente demande, un bloc de pixels correspond à un groupe de pixels adjacents, chacun bloc incluant plusieurs pixels répartis sur plusieurs lignes de pixels voisines et sur plusieurs colonnes de pixels voisines. Ainsi, chaque bloc de pixels forme, au sein de chaque groupe de pixels, une « sous-matrice » de dimension minimale 2x2 pixels (mais pouvant avoir de plus grandes dimensions).

De manière avantageuse, chaque pixel peut correspondre à un module distinct des autres pixels et peut être reporté sur un support de la matrice de pixels sur lequel se trouvent tout ou partie des réseaux de distribution de données principaux et les circuits de contrôle. De tels pixels sont très avantageux car ils sont particulièrement bien adaptés pour la réalisation d'écrans de grandes dimensions qui nécessitent, pour des raisons de coûts, d'utiliser un support qui n'est pas un wafer semi-conducteur. La réalisation des pixels sous la forme de tels modules permet également d'avoir plus de place pour les lignes d'alimentation électrique des pixels en raison de la surface de support disponible entre les modules, ce qui permet de réduire les résistances d'accès. Cette configuration permet en outre d'envisager la réalisation des lignes conductrices du dispositif dans un seul niveau.

Dans une configuration particulière, le dispositif d'affichage peut être tel que chaque circuit de contrôle comporte au moins un circuit de réception de données configuré pour identifier, sur le réseau de distribution de données principal associé, la partie des données numériques destinée à être affichée par le bloc de pixels auquel le circuit de contrôle est associé, par exemple au moyen d'une adresse associée au circuit de réception de données, sur le réseau de distribution de données principal associé comprenant un bus de données.

Dans cette configuration particulière, dans chaque groupe de pixels, le routage des différentes parties de données numériques dans les différents blocs de pixels peut être réalisé par adressage sur le réseau de distribution de données principal. Cette configuration peut être mise en œuvre quelle que soit la taille des parties des données numériques, c'est-à-dire quelle que soit la quantité de données numériques destinées à chaque bloc de pixels, que cette taille soit constante ou non d'un bloc de pixels à l'autre du groupe de pixels. Dans chaque circuit de contrôle, une fois identifiée par le circuit de réception de données, la partie des données numériques destinée à être affichée par le bloc de pixels auquel le circuit de contrôle est associé peut être stockée dans le circuit mémoire principal du circuit de contrôle. Dans chaque circuit de contrôle, une sortie de données du circuit de réception de données peut être couplée à une entrée de données du circuit mémoire principal afin que le circuit de réception de données puisse transférer ces données au circuit mémoire principal.

Dans une autre configuration particulière, dans chaque groupe de pixels, les circuits de contrôle peuvent comporter des registres à décalage principaux couplés en série d'un circuit de contrôle à l'autre et distincts des circuits mémoires principaux, le registre à décalage principal d'un circuit de contrôle étant configuré pour réceptionner, sur le réseau de distribution de données principal, la partie des données numériques destinée à être affichée par le bloc de pixels auquel le circuit de contrôle est associé. Une telle configuration peut être mise en œuvre lorsque la taille des sous-parties des données numériques est constante pour chaque groupe de pixels. Dans chaque circuit de contrôle, une sortie de données du registre à décalage principal peut être couplée à une entrée de données du circuit mémoire principal afin que le registre à décalage principal puisse transférer ces données au circuit mémoire principal.

Chaque pixel peut comporter en outre un circuit mémoire secondaire couplé au réseau de distribution de données secondaire, le circuit mémoire secondaire pouvant être configuré pour mémoriser les données numériques destinées à être affichées par le ou les éléments lumineux du pixel, le circuit de pilotage du pixel comprenant une entrée couplée à une sortie du circuit mémoire secondaire du pixel et au moins une sortie couplée à ou aux éléments lumineux du pixel.

Selon un premier mode de réalisation, dans chaque bloc de pixels, les circuits mémoires secondaires peuvent comporter des registres à décalage secondaires couplés en série d'un pixel à l'autre et configurés pour faire transiter les données numériques destinées à être affichées par les pixels d'un même bloc d'un pixel à l'autre. Cette configuration a pour avantage d'être simple à réaliser et peu coûteuse compte tenu du faible nombre de transistors requis pour réaliser les registres à décalage, et donc des faibles surfaces de semi-conducteur nécessaires à la réalisation des registres à décalage. Cette configuration sera utilisée lorsque le nombre de bits à transmettre à chaque pixel d'un même bloc est identique. Cette configuration permet également de réaliser tous les pixels de manière identique, sans adresse spécifique.

Dans ce premier mode de réalisation, dans chaque pixel, chaque circuit mémoire secondaire peut comporter en outre un verrou (« latch » en anglais) comprenant au moins une entrée couplée à une sortie du registre à décalage secondaire du circuit mémoire secondaire, et au moins une sortie couplée à l'entrée du circuit de pilotage du pixel.

Dans un deuxième mode de réalisation, le dispositif d'affichage peut être tel que :
- chaque pixel comporte au moins un circuit de décodage d'adresse secondaire couplé au réseau de distribution de données secondaire associé, le circuit de décodage d'adresse secondaire étant apte à identifier des données numériques destinées à être affichées par le pixel ;
- chaque bloc de pixels comporte au moins une liaison de données secondaire de type bus de données à laquelle au moins une entrée du circuit de décodage d'adresse secondaire de chaque pixel du bloc de pixels est couplée.

Dans ce deuxième mode de réalisation, chaque circuit mémoire secondaire peut comporter :
- au moins un registre comprenant au moins une entrée couplée à une sortie du circuit de décodage d'adresse secondaire du pixel comprenant le circuit mémoire secondaire, et
- au moins un verrou comprenant au moins une entrée couplée à une sortie du registre du circuit mémoire secondaire, une sortie du verrou étant couplée à une entrée du circuit de pilotage du pixel comprenant le circuit mémoire secondaire.

Le dispositif peut comporter en outre des circuits réducteurs de tension configurés pour alimenter électriquement les pixels.

Les circuits de pilotage peuvent comporter des modulateurs PWM ou BCM, ou des convertisseurs numérique - analogique.

Chaque groupe de pixels peut former plusieurs lignes complètes de la matrice de pixels.

Chaque circuit de contrôle peut être formé par une puce distincte des pixels du bloc de pixels auquel le circuit de contrôle est associé (ce qui a pour avantage que tous les pixels peuvent être identiques), ou chaque circuit de contrôle peut être intégré dans un des pixels du bloc de pixels auquel le circuit de contrôle est associé, ce qui réduit le nombre de puces à reporter sur le support (tous les pixels autres que ceux intégrant les circuits de contrôle peuvent être identiques).

La carte vidéo et/ou les circuits de contrôle et/ou les pixels peuvent comporter au moins un circuit de traitement numérique des données.

Au moins une partie des pixels peuvent comporter chacun au moins un photodétecteur couplé à un convertisseur analogique - numérique.

Dans ce cas, et lorsque le dispositif d'affichage est réalisé selon le premier mode de réalisation :
- dans chaque pixel, au moins une sortie du convertisseur analogique - numérique peut être couplée à une entrée du registre à décalage du pixel (c'est-à-dire celui servant à la réception des données numériques à afficher par le pixel) ;
- dans chaque bloc de pixels, une sortie du registre à décalage d'un des pixels du bloc de pixels peut être couplée électriquement à une entrée du circuit de contrôle associé au bloc de pixels.

Dans tout le texte de cette demande, le terme « couplé » peut désigner soit une connexion directe entre deux éléments, sans élément intermédiaire entre eux, soit une connexion indirecte entre ces deux éléments, c'est-à-dire une connexion formée à travers au moins un élément intermédiaire.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente schématiquement un dispositif d'affichage, objet de la présente invention, selon un premier mode de réalisation ;
- la figure 2 représente schématiquement une partie d'un dispositif d'affichage, objet de la présente invention, selon le premier mode de réalisation ;
- les figures 3A et 3B représentent deux exemples de réalisation de liaison série entre les pixels d'un bloc de pixels d'un dispositif d'affichage, objet de la présente invention ;
- la figure 4 représente un exemple de lignes d'alimentation et de masse au sein d'un bloc de pixel d'un dispositif d'affichage, objet de la présente invention ;
- la figure 5 représente schématiquement un autre exemple de réalisation d'un dispositif d'affichage, objet de la présente invention ;
- la figure 6 représente schématiquement un exemple de réalisation des pixels d'un dispositif d'affichage, objet de la présente invention ;
- les figures 7 et 8 représentent schématiquement un pixel d'un dispositif d'affichage, objet de la présente invention, selon des variantes du premier mode de réalisation ;
- la figure 9 représente schématiquement un pixel d'un dispositif d'affichage, objet de la présente invention, selon un deuxième mode de réalisation ;
- la figure 10 représente schématiquement une partie d'un dispositif d'affichage, objet de la présente invention, selon une variante de réalisation ;
- la figure 11 représente schématiquement un pixel d'un dispositif d'affichage, objet de la présente invention, selon une variante de réalisation ;
- la figure 12 représente schématiquement une partie d'un dispositif d'affichage, objet de la présente invention, selon une variante de réalisation ;
- la figure 13 représente schématiquement une partie d'un dispositif d'affichage, objet de la présente invention, selon une variante de réalisation ;
- la figure 14 représente une variante de réalisation du dispositif d'affichage, objet de la présente invention ;
- la figure 15 représente un exemple de lignes d'alimentation et de masse au sein d'un bloc de pixels d'un dispositif d'affichage, objet de la présente invention, le bloc de pixels incluant un circuit régulateur de tension.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

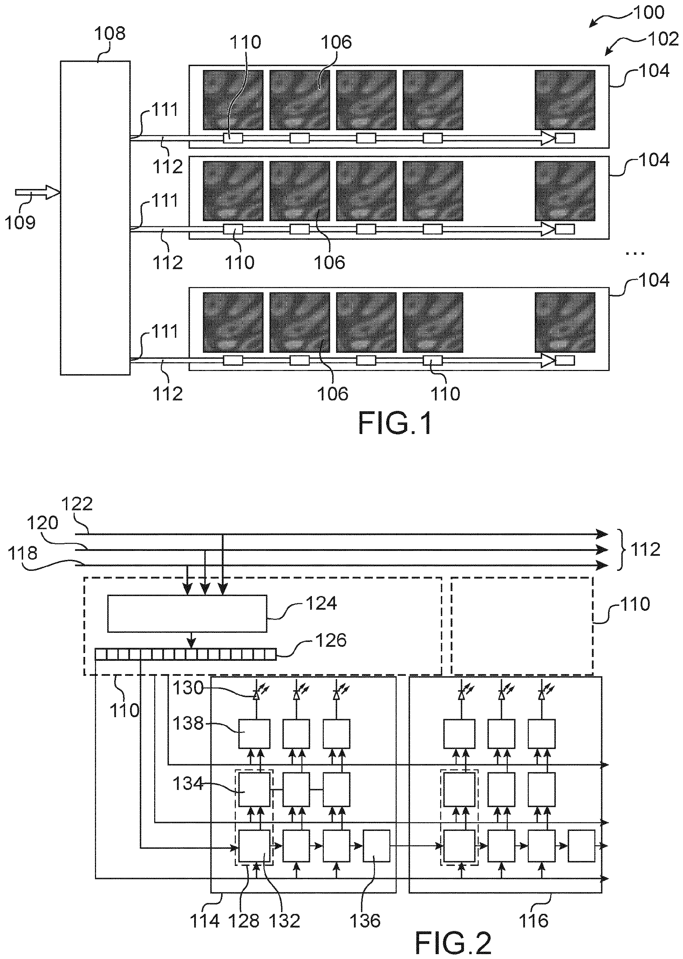

Un dispositif d'affichage 100 selon un premier mode de réalisation est décrit ci-dessous en lien avec la figure 1.

Le dispositif 100 comporte une matrice de pixels 102. Chaque pixel de la matrice 102 comporte un ou plusieurs éléments lumineux distincts. Les éléments lumineux des pixels correspondent par exemple à des LED (ou microLED) ou des OLED.

Outre ce ou ces éléments lumineux, chaque pixel du dispositif 100 comporte également au moins un circuit mémoire secondaire configuré pour mémoriser les données numériques destinées à être affichées par le ou les éléments lumineux du pixel, et au moins un circuit de pilotage configuré pour générer des signaux de commande du ou des éléments lumineux du pixel à partir des données numériques destinées à être affichées par le ou les éléments lumineux du pixel.

L'intégration de ces circuits électroniques, par exemple réalisés en technologie CMOS, au sein des pixels avec les éléments lumineux peut être réalisée comme décrit dans les documents EP 3 381060 A1 et « A New Approach for Fabricating High-Performance MicroLED Displays » de F. Templier et al., SID Symposium Digest of Technical Papers, Volume 50 (1), June 1, 2019. Par exemple, les LED correspondant aux éléments lumineux et les circuits électroniques des pixels peuvent être réalisés sur différents substrats, puis découpés, assemblés et enfin reportés sur un support, correspondant par exemple à un ou plusieurs circuits imprimés, destiné à servir également de support aux autres éléments du dispositif 100.

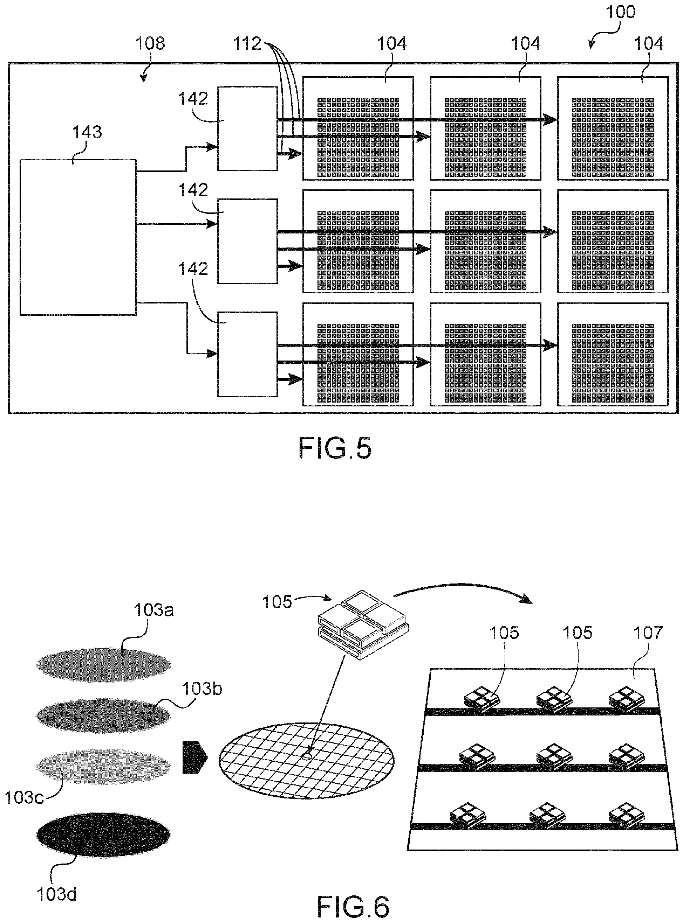

La figure 6 représente schématiquement la mise en œuvre d'une telle intégration des pixels. Sur l'exemple de cette figure, des éléments lumineux destinés à émettre chacun des couleurs rouge, vert et bleu sont réalisés sur des plaques de semi-conducteur (ou « wafers » en anglais) différentes référencées 103a, 103b et 103c pour chacune de ces couleurs. Les circuits électroniques (ici les circuits mémoires secondaires et les circuits de pilotage) sont réalisés en technologie CMOS sur une autre plaque de semi-conducteur 103d. Les éléments lumineux réalisés sur les wafers 103a, 103b et 103c sont découpés puis assemblés sur le wafer 103d. Les pixels obtenus sont découpés sous la forme de modules indépendants 105. En variante, les éléments lumineux peuvent être réalisés sur une seule plaque, et l'émission de couleur différente par ces éléments lumineux est obtenue en ajoutant des phosphores sur les éléments lumineux destinés à réaliser une émission lumineuse de couleur rouge ou verte. Dans ce cas, la plaque sur laquelle les éléments lumineux sont réalisés peut être solidarisée à la plaque 103d sans découpe préalable des éléments lumineux.

Chaque module 105 forme un pixel comprenant les différents éléments lumineux du pixel (il est toutefois possible que chaque module 105 comporte un seul élément lumineux) disposés sur une partie CMOS dans laquelle les circuits électroniques du pixel sont réalisés. Ces modules 105 sont ensuite reportés sur le support, portant la référence 107 sur la figure 6, de la matrice 102, à une distance souhaitée les uns des autres.

Ainsi, chaque module 105 forme un assemblage compact d'une ou plusieurs puces électroniques (avantageusement obtenues selon des procédés de fabrication de composants microélectroniques), doté d'une face de connexion comportant des plots de connexion destinés à être fixés et connectés électriquement à des plots de connexion correspondant au support de report. Ainsi, chaque module 105 comprend une puce monolithique ou un assemblage de plusieurs puces monolithiques connectées électriquement, et une pluralité de modules, par exemple identiques ou similaires, sont montés sur un même substrat de report, chaque module correspondant par exemple à un pixel du dispositif d'affichage. A titre d'exemple, les modules élémentaires des dispositifs d'affichage décrits, comportent chacun une pluralité de LED et un circuit de commande à base de transistors, et peuvent être fabriqués selon des procédés identiques ou similaires à ceux décrits dans la demande de brevet WO2017089676.

Chaque pixel de la matrice 102 est destiné à afficher un pixel de l'image ou de chaque image à afficher par le dispositif 100. Dans l'exemple de réalisation décrit ici, chaque pixel de la matrice 102 comporte trois éléments lumineux distincts, chacun destiné à émettre un signal lumineux de l'une des couleurs rouge, vert ou bleu. En variante, chaque pixel de la matrice 102 peut comporter plus de trois éléments lumineux distincts, comme par exemple lorsque le dispositif 100 est un dispositif multiscopique destiné à afficher simultanément une image selon plusieurs points de vue (dans le but d'afficher cette image en 3D), avec par exemple dans ce cas chaque pixel de la matrice 102 qui comporte autant d'ensembles de trois éléments lumineux distincts que de points de vue de l'image à afficher. En variante, chaque pixel de la matrice 102 peut comporter un seul élément lumineux, par exemple lorsque le dispositif 100 correspond à un écran monochrome.

La matrice 102 est divisée en plusieurs groupes de pixels 104. Chaque groupe 104 est lui-même divisé en plusieurs blocs de pixels 106. Dans l'exemple de réalisation décrit ici, la matrice 102 est divisée en 135 groupes de pixels 104, chacun de ces groupes de pixels 104 comportant 240 blocs de pixels 106. De plus, dans cet exemple, les groupes 104 sont agencés en lignes, et les blocs 106 correspondent à des blocs de 8 × 8 pixels. D'autres tailles de bloc de pixels 106 sont possibles : 16 × 16 pixels, 32 × 32 pixels, etc. Plus généralement, chaque bloc de pixels 106 correspond à une sous-matrice de pixels d'au moins 2 × 2 pixels, c'est-à-dire comprenant des pixels disposés sur au moins deux lignes de pixels consécutives et sur au moins deux colonnes de pixels consécutives.

A titre d'exemple, en considérant que le dispositif 100 correspond à un écran de 75 pouces, et que le pas des pixels, c'est-à-dire la distance entre les centres de deux pixels voisins, est par exemple égal à 865 µm, chaque bloc de pixels 106 a des dimensions égales à 55,36 × 55,36 mm², chaque groupe de pixels 104 a des dimensions égales à 55,36 × 1660 mm², et la matrice de pixels 102 a des dimensions égales à 1,66 × 0,93 m².

Toujours à titre d'exemple, le dispositif 100 peut correspondre à un écran de résolution dite « full HD » de 1920 × 1080 pixels, configuré pour réaliser un affichage de 100 images/s. Ce dispositif 100 peut être configuré pour afficher des données numériques dont le codage des images est de 24 bits, ou 3 octets, par pixel, c'est-à-dire un octet pour chacune des couleurs RVB à afficher par chaque pixel. Dans ce cas, le débit minimal de données reçues en entrée du dispositif 100 est égal à 4,98 Gbits/s. En considérant la répartition en groupes de pixels 104 et blocs de pixels 106 telle qu'indiquée ci-dessus, le débit minimal de données numériques envoyées à chaque groupe de pixels 104 depuis la carte vidéo 108 est de 36,9 Mbit/s.

Le dispositif 100 peut correspondre à un écran d'une toute autre résolution, et par exemple une résolution correspondant au format 4K ou 8K.

Le dispositif 100 comporte une carte vidéo 108 comprenant une entrée 109 configurée pour recevoir un signal numérique correspondant aux images, ou à la vidéo, destinées à être affichées par la matrice de pixels 102. L'entrée 109 est par exemple de type HDMI. La carte vidéo 108 peut comporter en outre une mémoire (non visible sur la figure 1) permettant de mémoriser les données correspondant à une ou plusieurs images à afficher par dispositif 100.

La carte vidéo 108 comporte plusieurs sorties 111 chacune couplée à un groupe de pixels 104. La carte vidéo 108 est configurée pour décoder le signal numérique reçu en entrée et envoyer sur chacune des sorties 111 des données numériques encodées dans un format adapté à la matrice de pixels 102 et destinées à être affichées par le groupe de pixels 104 couplé à la sortie 111.

Chaque groupe de pixels 104 comporte plusieurs circuits de contrôle 110 chacun associé à un bloc de pixels 106 du groupe de pixels 104. Chacun des circuits de contrôle 110 comporte un circuit mémoire principal 126 (visible sur la figure 2) configuré pour stocker une partie des données numériques destinée à être affichée par le bloc de pixels 106 associé. Le circuit de contrôle comprend également des éléments électroniques de contrôle configurés pour, à partir du circuit mémoire principal 126, envoyer, ou distribuer, aux pixels du bloc de pixels 106 associé la partie des données numériques destinée à être affichée par le bloc de pixels 106. Dans l'exemple de réalisation représenté sur la figure 1, chaque groupe de pixels 104 comporte 240 circuits de contrôle 110.

Dans le premier mode de réalisation décrit ici, chaque groupe de pixels 104 est associé à un réseau de distribution de données principal 112, de type bus de données dans cet exemple, couplé à l'une des sorties 111 de la carte vidéo 108 et auquel chacun des circuits 110 du groupe de pixels 104 est couplé. Dans cette configuration, chacun des circuits 110 identifie les données numériques à afficher par le bloc de pixels 106 auquel le circuit 110 est associé via un adressage de ces données. Dans chaque groupe de pixels 104, les adresses de chaque circuit 110 doivent être différentes les unes des autres. Dans l'exemple décrit ici, du fait que chaque groupe de pixels 104 comporte 240 blocs de pixels 106, les adresses des circuits 110 peuvent être définies sur 8 bits. Ces adresses peuvent être similaires d'un groupe de pixels 104 à l'autre. A titre d'exemple, les adresses des circuits 110 peuvent être définies de façon matérielle par des éléments conducteurs formés sur le support sur lequel les pixels sont reportés, ces éléments conducteurs étant reliés soit à l'alimentation (définissant dans ce cas un « 1 » binaire) soit à la masse (définissant dans ce cas un « 0 » binaire). Le nombre d'éléments conducteurs utilisés pour définir l'adresse de chaque circuit 110 dépend notamment du nombre de circuits 110 auxquels une adresse doit être octroyée au sein de chaque groupe de pixels 104. En définissant les adresses sur le support, il n'est pas nécessaire de coder ces adresses au sein des circuits de contrôle 110, ce qui permet aux circuits de contrôle 110 d'être tous réalisés de manière identique.

La figure 2 représente de manière plus détaillée le réseau de distribution de données principal 112, deux circuits de contrôle 110 et deux pixels, portant les références 114 et 116, faisant partie du bloc 106 auquel l'un des deux circuits 110 est associé. Bien que seuls les deux pixels 114, 116 soient représentés, le bloc 106 de l'exemple de réalisation représenté sur la figure 2 comporte 64 pixels reliés en série.

Dans l'exemple de réalisation décrit ici, le réseau 112 comporte un premier fil 118 sur lequel sont transmises les données numériques à afficher. Le réseau 112 comporte également un deuxième fil 120 sur lequel est transmis un signal d'horloge principal généré par la carte vidéo 108. Dans l'exemple de réalisation décrit ici, la fréquence de ce signal d'horloge principal est par exemple de l'ordre de 40 MHz lorsque le débit de données numériques envoyées à chaque groupe de pixels 104 est de 36,9 Mbit/s. Le réseau 112 comporte également un troisième fil 122 sur lequel est transmis un signal de déclenchement d'affichage principal dont le rôle est de déclencher l'affichage, par les éléments lumineux des pixels, des données reçues par les pixels. De manière alternative, l'affichage des données reçues par les pixels peut être déclenché par un message spécifique transmis sur le premier fil 118 du réseau 112 et adressé à tous les circuits de contrôle 110 via l'utilisation d'une adresse spécifique dédiée à cet affichage.

Tous les blocs de pixels 106 faisant partie d'un même groupe de pixels 104 sont couplés à un même réseau de distribution de données principal 112, ou autrement dit à un même bus de données dans cet exemple. Selon un exemple de réalisation, il est possible qu'au moins l'un des fils 120 et 122 soit commun à plusieurs réseau de distribution de données principaux 112, c'est-à-dire qu'un même signal d'horloge principal et/ou un même signal de déclenchement d'affichage principal soient envoyés à plusieurs groupes de pixels 104.

Le circuit 110 comporte un circuit de réception de données 124 comprenant des entrées couplées à chacun des fils 118, 120, 122 du réseau 112. Ce circuit 124 réalise le décodage d'adresse des données transmises sur le réseau 112 et récupèrent les données transitant sur le fil 118 quand l'adresse de ces données correspond à celle du circuit 110. Les données récupérées sont stockées dans un circuit mémoire principal 126 du circuit 110, ces données numériques récupérées correspondant aux données à afficher par les pixels du bloc 106 associé. Du fait que le circuit 110 identifie les données numériques destinées au bloc 106 associé grâce à un système d'adressage, le fait que la quantité de données numériques destinées à ce bloc 106 soit similaire ou non à celles destinées aux autres blocs 106 du groupe de pixels 104, l'ordre dans lequel les données sont transmises et leur éventuel découpage en plusieurs messages n'ont pas d'importance.

On notera que le circuit mémoire principal 126 ne fait pas partie du circuit de réception des données du circuit 110 à proprement parler. Le circuit mémoire principal 126 joue le rôle d'un registre tampon permettant de décorréler, dissocier, la partie réception de données provenant du bus 112, de la partie décrite ci-après, permettant d'envoyer, de distribuer, ces données vers les différents pixels du bloc.

En considérant l'exemple de réalisation ci-dessus dans lequel les données numériques destinées à être affichées pour chaque image comportent, pour chaque pixel, 3 octets (un octet pour chaque couleur à afficher par chacun des éléments lumineux du pixel), le circuit 126 est apte à mémoriser au moins 192 octets (64 pixels ^{∗} 3 octets).

Chaque pixel comporte ici un ou plusieurs circuits mémoires secondaires 128 destinés à mémoriser les valeurs numériques à afficher par le ou les éléments lumineux (portant la référence 130 sur la figure 2, et qui correspondent par exemple à des LED ou microLED) dudit pixel. Dans l'exemple de réalisation décrit ici, chaque circuit 128 comporte un registre à décalage 132 de 8 bits couplé à un verrou 134 (circuit « latch »). Les registres 132 sont couplés en série formant une chaîne de registres au sein de chaque bloc de pixels 106, la sortie d'un registre associé à un pixel étant reliée à un registre suivant dans ce même pixel ou étant reliée à l'entrée d'un registre d'un pixel « suivant ». En variante, il est possible d'avoir un seul registre commun aux circuits mémoires secondaires 128 d'un même pixel, ou bien, selon une autre variante, plusieurs chaînes de registres, par exemple chacune associés à une couleur de pixels. D'autres variantes sont également possibles.

Les circuits mémoires secondaires 128 sont couplés à un réseau de distribution de données secondaire 152 assurant la distribution des données depuis l'un des circuits de contrôle 110 jusqu'aux pixels du bloc de pixels 106 associé au dit circuit de contrôle 110.

L'un des registres 132 d'un des pixels du bloc 106, formant le premier pixel de la chaîne de registres du bloc 106, est relié au circuit de commande 110 par l'un des fils du réseau de distribution de données secondaire 152 et reçoit successivement en entrée les données mémorisées dans le circuit 126 du circuit 110. Au rythme d'un signal d'horloge cadençant le déplacement série des données à travers la chaîne de registres, les données initialement présentes dans le circuit mémoire 126 sont positionnées dans l'ensemble des registres de la chaîne. Un amplificateur 136, ou buffer, peut être présent en sortie de chaque pixel pour assurer si nécessaire le maintien du niveau d'amplitude des données transmises d'un pixel à l'autre. Les registres 132 de tous les pixels du bloc 106 reçoivent en entrée un signal d'horloge de décalage généré par le circuit 110, transmis aux registres 132 par un autre fil du réseau 152 et commandant le décalage des données dans les registres. En considérant l'exemple de réalisation décrit ici, la fréquence du signal d'horloge de décalage est supérieure ou égale à 153 kHz (pour transmettre 100 fois par seconde 1536 bits). Le signal d'horloge de décalage peut être généré par le circuit de commande 110 à partir du signal d'horloge principal transmis sur le réseau 112. Enfin, les verrous 134 de tous les pixels du bloc 106 reçoivent un signal de déclenchement de mémorisation généré par le circuit 110, transmis sur un autre fil du réseau 152 et qui commande le stockage, dans les verrous 134, des valeurs numériques présentes dans les registres 132. Ce signal de déclenchement de mémorisation est par exemple généré à partir du signal de déclenchement d'affichage transmis sur le troisième fil 122, par exemple lorsque la transmission des données dans tous les circuits de contrôle 110 est achevée dans le groupe de pixels.

Du fait que des registres à décalage 132 soient utilisés au sein des pixels du bloc 106, la quantité de données numériques destinées à chaque pixel est identique pour tous les pixels du bloc 106. Réciproquement, l'utilisation d'une quantité de données numériques identique pour tous les pixels du bloc 106 permet de faire appel à des registres à décalage 132 au sein des pixels, peu coûteux en surface de semi-conducteur.

Chaque pixel comporte également au moins un circuit 138 de pilotage configuré pour générer des signaux de pilotage des éléments lumineux 130 du pixel à partir des données numériques mémorisées dans le verrou 134 associé. Lorsque les éléments lumineux 130 correspondent à des LEDs, le circuit de pilotage comprend par exemple un transistor placé en série avec une LED entre deux bornes d'alimentation ; ce transistor étant alors commandé par un signal « tout ou rien ». Dans l'exemple de réalisation décrit ici, chaque circuit 138 comprend un modulateur PWM (modulation de largeur d'impulsion) générant, à partir des données présentes dans le verrou 134, un signal de commande tout ou rien PWM du transistor en série avec la LED associée. Un tel signal de commande PWM forme de façon connue un signal alternant entre deux niveaux de tension qui conduisent respectivement à la conduction ou la non conduction du transistor et par suite de la LED. La durée du niveau de tension conduisant à la conduction de la LED est déterminée par la valeur à afficher par l'élément lumineux 130. Par rapport à un convertisseur numérique - analogique, un modulateur PWM occupe une surface de semi-conducteur bien moins importante. En outre, il est possible d'envisager de corriger d'éventuelles dispersions technologiques entre les LED ou des problèmes de non linéarité des éléments lumineux, en adaptant les valeurs numériques servant au commande du transistor en série avec la LED.

On notera qu'il existe dans l'état de l'art différent circuits de « réglage/commande » de la LED plus ou moins élaborés, l'unique transistor mentionné ci-dessus pouvant être associée à un montage cascode ou tout autre dispositif électronique permettant de bien contrôler le courant parcourant la LED.

La sortie de chaque circuit 138 est ainsi couplée à l'un des éléments lumineux 130. La génération du signal de commande PWM par le circuit 138 est pilotée par un signal d'horloge de commande généré par le circuit 110 et transmis sur un des fils du réseau 152. La fréquence du signal d'horloge de commande est choisie comme étant suffisamment élevée pour éviter des problèmes de scintillement, et par exemple comprise entre 100 et 1000 fois la fréquence d'affichage d'images du dispositif 100, voire plus importante encore, comme par exemple égale à quelques MHz ou quelques dizaines de MHz (l'utilisation d'une fréquence élevée a pour avantage de réduire le besoin de précision sur la fréquence de ce signal, mais entraîne une consommation plus élevée du circuit 138, un compromis devant ainsi être trouvé). Le signal d'horloge de commande peut être dérivé du signal d'horloge principal transmis sur le bus 112 ou localement créé.

En variante du modulateur PWM décrit ci-dessus, il est possible que chaque circuit 138 corresponde à un modulateur BCM (modulation de code binaire). Des détails d'une telle modulation appliquée à l'affichage d'une matrice de pixels sont donnés dans le document EP3 550 550 A1.

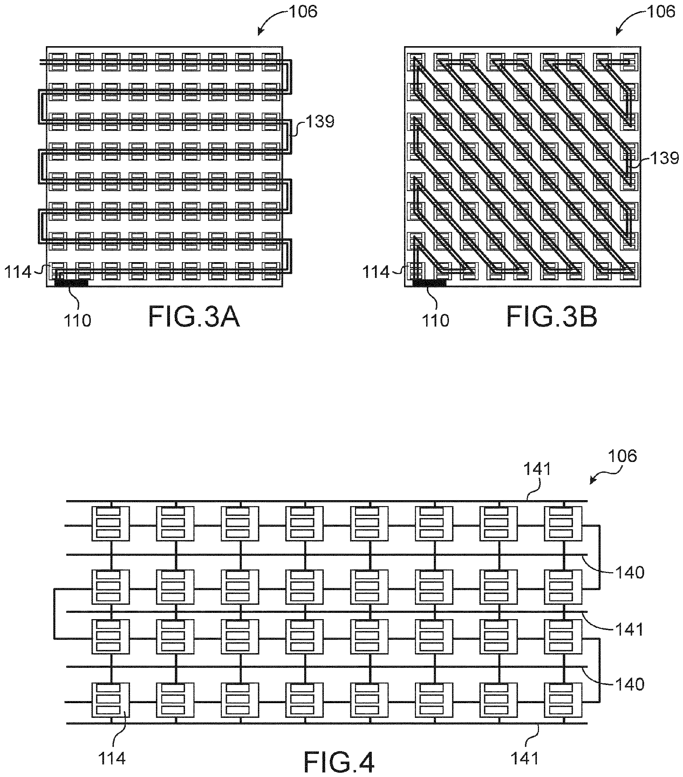

Au sein de chaque bloc de pixels 106, les registres à décalage 132 des différents pixels peuvent être reliés en série, par des fils du réseau 152, de différentes manières : ligne par ligne, colonne par colonne, en serpentin, etc. Deux exemples de liaison série entre les registres à décalage 132 des pixels d'un bloc de pixels 106 (agencé en bloc de 8 × 8 pixels) sont représentés sur les figures 3A et 3B. Sur ces figures, la référence 139 désigne la liaison du réseau 152 sur laquelle transitent les données numériques à travers chacun des registres à décalage 132. L'ordre dans lequel les données numériques sont envoyées dans chaque bloc de pixels 106 tient compte de la liaison des pixels au sein du bloc de pixels 106.

Dans l'exemple de réalisation décrit ci-dessus, tous les pixels sont identiques, ce qui facilite leur fabrication et leur report sur le substrat de l'écran.

Pour la réalisation du dispositif 100, il est possible que les pixels soient disposés sur une face avant du support du dispositif 110, et que les circuits 110 soient reportés sur une face arrière du support. Les différents fils du dispositif 100 précédemment décrits peuvent être réalisés sur la face avant et/ou la face arrière du support. En outre, les adresses des circuits 110 peuvent définies par gravure sur le support, correspondant par exemple à un circuit imprimé, comportant les lignes d'interconnexions électriques. En outre, dans le dispositif 100, les différents fils reliés aux pixels peuvent être répartis sur les faces avant et arrière du support, voire dans plusieurs niveaux de routage formés dans et sur le support.

En variante de l'exemple de réalisation décrit ci-dessus, chaque bloc 106 peut correspondre à un bloc de 16 × 16 pixels, ce qui permet de réduire au final le nombre de circuits 110 dans le dispositif 100. Plus généralement, le nombre de pixels dans chaque bloc 106 peut être déterminé en fonction des débits souhaités sur les différentes lignes de connexion, des durées de traitement disponibles, etc. Ces paramètres peuvent être pris en compte lors de la conception du dispositif 100 pour déterminer le nombre de groupes de pixels 104 et de blocs de pixels 106 du dispositif 100.

Outre les signaux précédemment décrits, les pixels sont également chacun connectés à une ligne d'alimentation et une ligne de potentiel électrique de référence. La figure 4 représente un exemple de configuration de pixels au sein d'un bloc 106, dans lequel au moins une partie des lignes d'alimentation 141 et des lignes de masse 140 sont partagées entre deux lignes de pixels voisines. Des capacités de découplage, non visibles sur la figure 4, peuvent être également présentes pour filtrer et stabiliser l'alimentation des pixels qui peut être bruitée par les appels de courant sur les résistances d'accès, en particulier celles liées à la longueur des lignes d'alimentation. Le routage des lignes d'alimentation 141 et des lignes de masse 140 peut être réalisé avec une couche d'interconnexion, ou plusieurs couches (par exemple une couche pour l'alimentation et une autre pour la masse pour réduire les résistances d'accès, en intégrant l'utilisation de vias).

Dans le premier mode de réalisation précédemment décrit, les groupes 104 de pixels correspondent à des pixels répartis sur huit lignes de pixels. En variante, les groupes 104 de pixels peuvent être différents. Par exemple, les pixels d'une même ligne de la matrice 102 peuvent être répartis dans plusieurs groupes de pixels 104 distincts, comme c'est le cas sur l'exemple schématique de la figure 5. Sur l'exemple de la figure 5, chaque groupe de pixels 104 correspond à un « macropixel », chaque macropixel correspondant à une matrice de pixels de 8^{∗}35 par 8^{∗}40 pixels (équivalent à 35^{∗}40 groupes de pixels de 8^{∗}8), la matrice 102 disposant ainsi d'une matrice de 3 par 3 macropixels.

En outre, sur la figure 5, la carte vidéo 108 comporte un circuit principal 143 réalisant les fonctions précédemment décrites pour la carte vidéo 108, et des circuits de pilotage 142 interposés entre le circuit principal 143 et les réseaux 112 et assurant la distribution des données numériques à afficher aux différents groupes de pixels 104. Le dispositif 100 comporte de tels circuits de pilotage 142 notamment lorsque le nombre de groupes de pixels 104 est trop important pour que le nombre de sorties du circuit principal 143 de la carte vidéo 108 soit égal au nombre de groupes de pixels 104.

Dans l'exemple de réalisation précédemment décrit, les circuits de contrôle 110 sont réalisés sous la forme de puces électroniques distinctes des pixels. En variante, il est possible que chaque circuit 110 soit formé au sein du premier pixel de chaque bloc 106, c'est-à-dire le pixel qui est directement connecté au circuit 110.

Dans l'exemple de réalisation précédemment décrit, le nombre de bits de la donnée numérique à afficher par chaque élément lumineux 130 est égal à 8. Ce nombre de bits peut être différent, et par exemple égal à 10.

Dans l'exemple de réalisation précédemment décrit, le signal d'horloge de commande et le signal d'horloge de décalage sont distincts et tous les deux envoyés en entrée de chaque pixel.

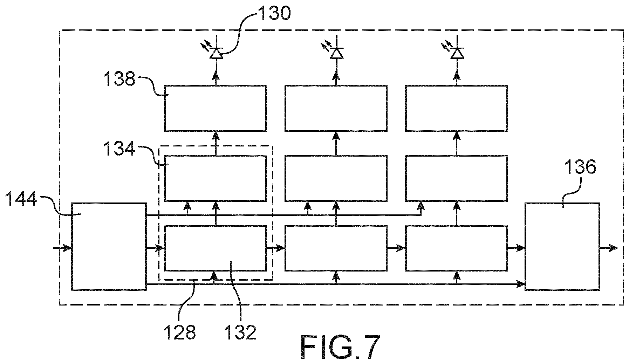

Dans le premier mode de réalisation précédemment décrit, chaque circuit mémoire secondaire 128 comporte un registre à décalage 132 couplé à un verrou 134, et chaque circuit de pilotage 138 comporte un modulateur PWM ou BCM. Selon une variante, chaque circuit de pilotage 138 peut comporter, à la place du modulateur PWM ou BCM, un convertisseur numérique - analogique délivrant en sortie un signal analogique pilotant l'émission lumineuse de l'un des éléments lumineux 130. Chaque convertisseur numérique - analogique convertit la donnée numérique à afficher mémorisé dans un des verrous 134 en un courant délivré à l'élément lumineux 130 et dont la valeur est par exemple déterminée suivant une courbe de conversion adaptée aux caractéristiques de l'élément lumineux 130. Par rapport à un modulateur PWM ou BCM, un tel convertisseur numérique - analogique a pour inconvénient d'être plus encombrant. La figure 7 représente une telle variante.

En outre, dans la configuration représentée sur la figure 2, chaque pixel reçoit en entrée le signal de données, le signal d'horloge de décalage commandant les registres à décalage 132, le signal d'horloge de commande destiné aux modulateurs PWM ou BCM, et le signal de déclenchement de mémorisation commandant les verrous 134.

Dans la configuration représentée sur la figure 7, lorsque les convertisseurs analogique - numérique sont asynchrones, chaque pixel peut ne recevoir, via le réseau 152, qu'un seul signal. Dans cet unique signal, les données peuvent être codées en utilisant la durée des impulsions telle que :
- un état haut de courte durée (par exemple égale à un tiers de la période) code un bit dans un premier état (par exemple « 0 ») ;
- un état haut de longue durée (par exemple égale à deux tiers de la période) code un bit dans un deuxième état (par exemple « 1 ») ;
- un état bas pendant toute une période correspond à un reset, commandant l'affichage des données se trouvant dans les registres 132.

Dans cette configuration, chaque pixel comporte un circuit 144 générant, à partir de l'unique signal reçu, un signal de données numériques envoyé à l'entrée d'un premier registre à décalage 132 (les registres 132 du pixel sont reliés en série, comme dans les précédents exemples), un signal d'horloge de décalage commandant les registres à décalage 132, et un signal de déclenchement de mémorisation commandant la mémorisation, dans les verrous 134, des valeurs des données présentes dans les registres 132. En reprenant l'exemple de codage décrit ci-dessus, les valeurs des bits des données numériques générées par le circuit 144 sont fonction de la durée de chaque état haut détecté dans le signal reçu en entrée du circuit 144. La mémorisation dans les verrous 134 est déclenchée lorsqu'un reset est détecté dans le signal reçu en entrée du circuit 144.

Cette configuration a pour avantage de limiter le nombre de fils connectés en entrée et en sortie des pixels, c'est-à-dire le nombre de fil du réseau de distribution de données secondaire 152, facilitant ainsi la réalisation du dispositif 100.

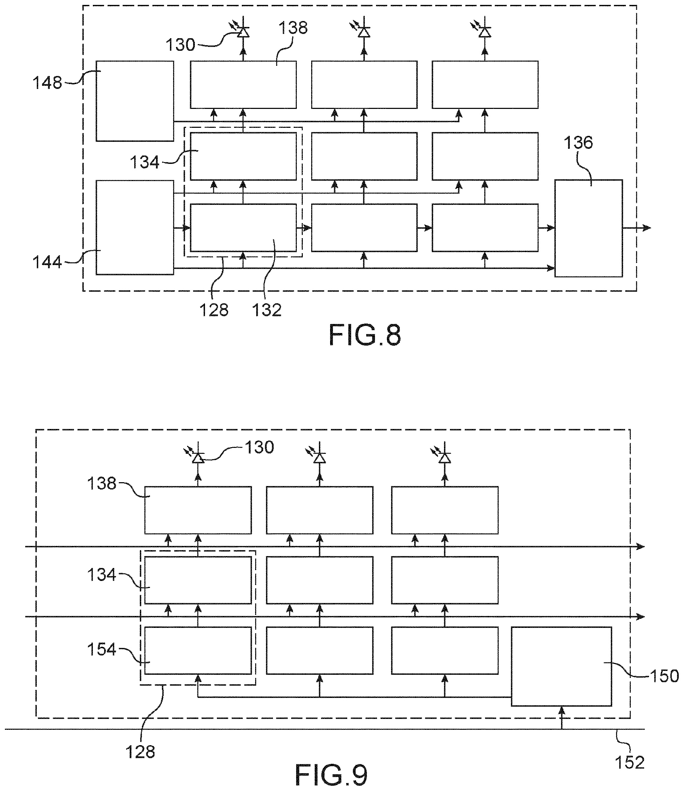

La figure 8 représente une autre variante de réalisation des pixels du dispositif 100. Dans cette autre variante, chaque pixel comporte tous les éléments du pixel représenté sur la figure 7, excepté le circuit 138 qui comporte un modulateur PWM ou BCM à la place du convertisseur numérique - analogique. Dans cette variante, étant donné que le pixel ne reçoit pas en entrée le signal d'horloge de commande, ce signal d'horloge de commande est généré localement au sein de chaque pixel par un circuit 148.

Par rapport aux convertisseurs numérique - analogique, les modulateurs PWM ou BCM ont pour avantage d'être moins encombrants et de commander les éléments d'affichage avec uniquement des signaux numériques, ce qui facilite le pilotage en intensité lumineuse des éléments lumineux 130

Dans les configurations précédemment décrites, les données sont transmises sur des fils distincts de ceux utilisés pour l'alimentation électrique. En variante, il est possible que les données soient transmises en étant modulées dans les signaux d'alimentation électrique. Dans ce cas, une étape supplémentaire de démodulation est mise en œuvre dans les pixels. Des détails de réalisation d'une telle variante sont expliqués dans le document EP3 649 672 A1 et peuvent être appliqués par analogie dans la présente invention.

Outre les éléments dédiés à l'affichage des données numériques, le dispositif 100 peut comporter des éléments de gestion des erreurs de transmission (code de parité, correction d'erreurs, bits de signalisation, etc.) et les circuits de contrôles 110 peuvent comporter les traitements numériques associés. Un fil, ou lien, d'accusé-réception peut éventuellement être prévu dans le réseau 112, afin que chaque circuit de commande 110 puisse communiquer à la carté vidéo 108 la bonne ou mauvaise réception des données et demander un éventuel renvoi de données le cas échéant.

Dans le premier mode de réalisation précédemment décrit ainsi que dans ses différentes variantes de réalisation, les circuits mémoires secondaires 128 sont, dans chaque bloc de pixels 106, reliés en série les uns aux autres.

Dans un deuxième mode de réalisation, chaque pixel comporte un circuit de décodage d'adresse secondaire 150 apte à identifier les données numériques destinées à être affichées par le pixel. Dans chaque bloc de pixels 106, les entrées des circuits 150 des pixels du bloc 106 sont couplées au réseau de distribution de données secondaire associé à ce bloc de pixels 106, le réseau de distribution étant par exemple du type bus de données.

La figure 9 représente un exemple de réalisation d'un pixel du dispositif 100 selon ce deuxième mode de réalisation. Dans cet exemple de réalisation, chaque circuit mémoire secondaire 128 du pixel comporte un registre 154 comprenant une entrée couplée à une sortie du circuit 150, et le verrou 134 dont l'entrée est couplée à la sortie du registre 154.

Dans ce deuxième mode de réalisation, les données numériques ne sont plus distribuées en série à travers les registres à décalage 132, mais sont transmises à tous les circuits 150 du bloc 106 via le réseau de distribution de données secondaire 152. De plus, chaque pixel comporte une adresse qui lui est propre. Cette adresse peut être codée dans une mémoire non volatile de chaque circuit 150, ou physiquement sur le substrat comme précédemment décrit pour les adresses des circuits de contrôle 110. Avec ce deuxième mode de réalisation, la quantité de données numériques destinées à chaque pixel du bloc 106 peut être différente d'un pixel à l'autre et éventuellement découpées en plusieurs paquets.

Les différentes variantes de réalisation précédemment décrites pour le premier mode de réalisation peuvent s'appliquer à ce deuxième mode de réalisation.

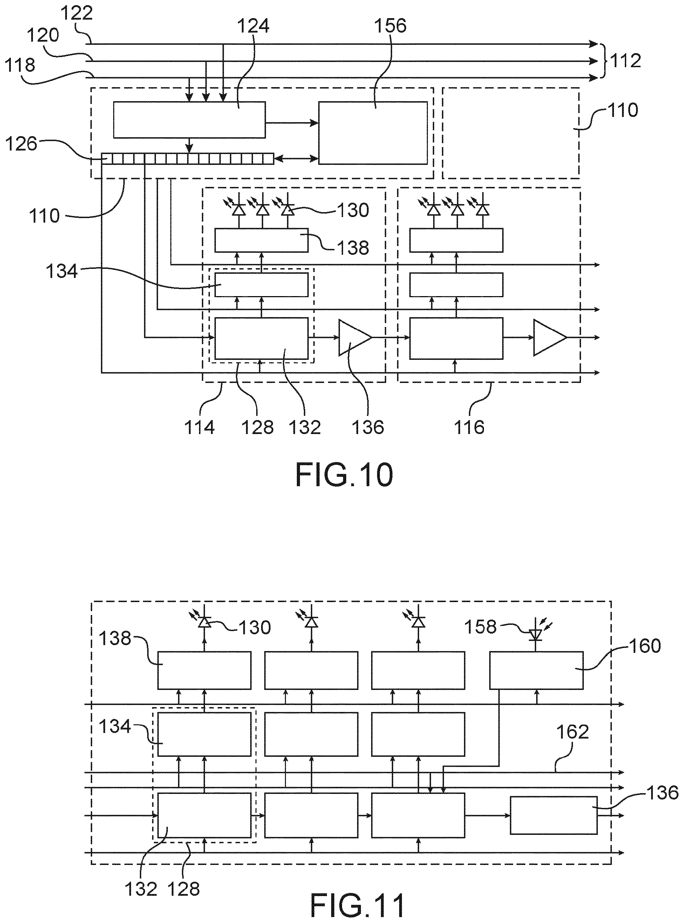

Dans tous les modes de réalisation et variantes, les circuits de contrôle 110 et/ou la carte vidéo 108 peuvent réaliser, en plus de l'envoi des données numériques à afficher et des signaux d'horloge à chaque groupe de pixels 104 et/ou bloc de pixels 106, un ou plusieurs traitements numériques des données à afficher avant leur envoi aux groupes de pixels 104 et/ou blocs de pixels 106. Ce ou ces traitements numériques des données peuvent correspondre par exemple à une correction de luminosité, une correction de gamma en fonction d'une courbe de correction de couleur pour toute la matrice 102, ou une calibration des pixels. Toutes ces possibilités de correction peuvent être traduites par un ajustement des signaux de pilotage du niveau d'émission des éléments lumineux. La figure 10 représente schématiquement un circuit 110 comportant un circuit 156 qui inclut une mémoire destinée à stocker de manière permanente ou non des informations numériques utiles pour la mise en œuvre d'un ou plusieurs traitements numériques des données à afficher. De la même manière, lorsqu'un ou plusieurs de ces traitements numériques est réalisé par la carte vidéo 108, celle-ci comporte alors un circuit électronique adapté pour mettre en œuvre ce ou ces traitements numériques. En outre, un ou plusieurs de ces traitements numériques peuvent également être réalisés directement dans chaque pixel, en ajoutant dans ce cas un circuit de traitement de données par exemple dans la partie formant les circuits mémoires et de calcul 128, 138 de chaque pixel.

Dans tous les modes de réalisation et variantes décrits précédemment, il est possible que chaque pixel, ou au moins une partie des pixels, comportent au moins un capteur. La figure 11 représente schématiquement un exemple de réalisation d'un tel pixel.

Ce pixel comporte, en plus des éléments précédemment décrits en lien avec la figure 2, un photodétecteur 158 correspondant par exemple à une photodiode, et un convertisseur analogique - numérique 160. Le signal délivré par le photodétecteur 158 est envoyé à l'entrée du convertisseur analogique - numérique 160. Le choix du nombre de bits pouvant être convertis par le convertisseur 160 dépend notamment de la résolution souhaitée et également de la place disponible dans le pixel. A titre d'exemple, le convertisseur 160 peut être apte à réaliser une conversion sur 8 bits ou sur 4 bits, voire même 1 bit (le convertisseur 160 formant dans ce cas un comparateur).

Pour son cadencement, le convertisseur 160 reçoit en entrée, sur l'exemple de la figure 11, le même signal d'horloge que celui appliqué en entrée des modulateurs PWM, à savoir le signal d'horloge de commande. La sortie du convertisseur 160 est couplée à une entrée d'un des registres 132 du pixel. Ce registre 132 reçoit en entrée un signal de chargement envoyé depuis le circuit de contrôle 110, par l'intermédiaire d'un fil 162 du réseau 152 dédié à ce signal, par exemple lors de la réception d'un ordre de lire les photodétecteurs 158.

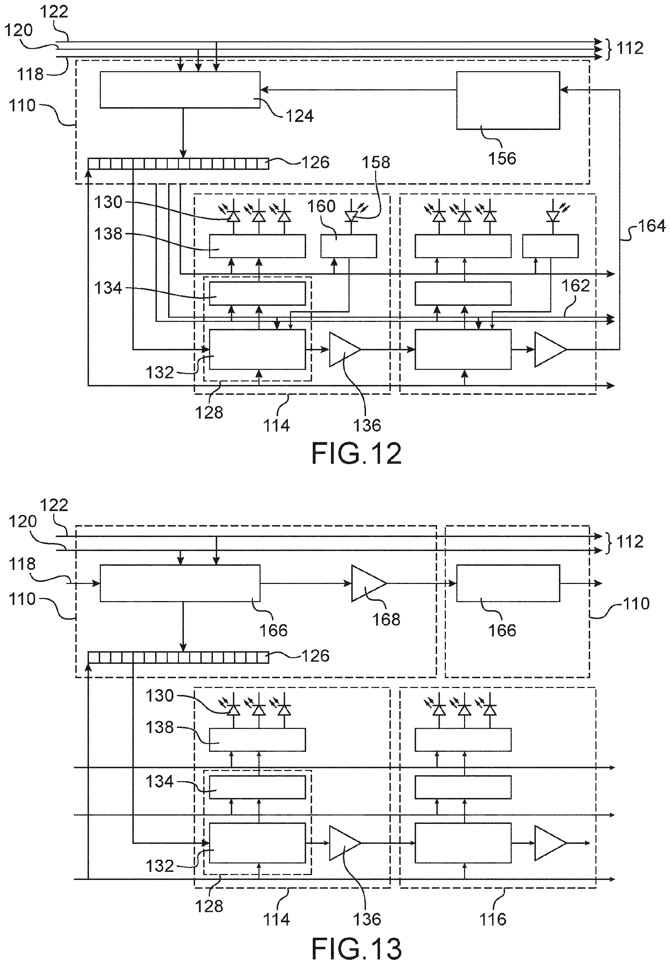

De manière avantageuse, afin de faciliter la récupération des données de photodétection, le fil servant à la transmission du signal de données numériques à afficher est rebouclé depuis la sortie du dernier registre 132 du bloc de pixels 106 jusqu'à une entrée du circuit 110 associé au bloc de pixels 106. Ce rebouclage est représenté sur la figure 12 par un fil 164 allant du buffer de sortie du dernier pixel du bloc de pixels 106 jusqu'au circuit 110 associé à ce bloc de pixels 106.

Les données de photodétection récupérées sur les circuits de contrôle 110 peuvent ensuite être pré-traitées numériquement dans les circuits de contrôle 110, par exemple pour réaliser une détection de mouvement en stockant localement les données acquises au temps précédent, en effectuant des différences avec les données qui viennent d'être acquises, et en ne transmettant que les données pertinentes, par exemple les changements, ce qui réduit la quantité de données à envoyer vers l'extérieur, puis à traiter.

Dans les premier et deuxième modes de réalisation décrits précédemment, dans chaque groupe de pixels 104, les circuits de contrôle 110 sont couplés à un réseau de distribution de données principal 112 et chaque circuit 110 comporte un circuit de réception de données 124 lui permettant d'identifier les données numériques à afficher par le bloc de pixels 106 auquel il est associé, et d'envoyer ces données aux pixels du bloc 106. En variante, il est possible que dans chaque groupe de pixels 104, les circuits de contrôle 110 comportent un circuit de réception de données réalisé différemment que précédemment, et comprenant au moins un registre à décalage 166 couplé en série avec les registres à décalage des autres circuits de contrôle 110 du groupe de pixels 104. Une telle configuration est représentée schématiquement sur la figure 13. La sortie du registre à décalage 166 d'un circuit de contrôle 110 est couplée à l'entrée du registre à décalage 166 du circuit de contrôle 110 suivant à travers un amplificateur 168.

Dans tous les modes de réalisation, les différentes liaisons formées par des fils électriques peuvent être remplacées par des liaisons optiques ou RF.

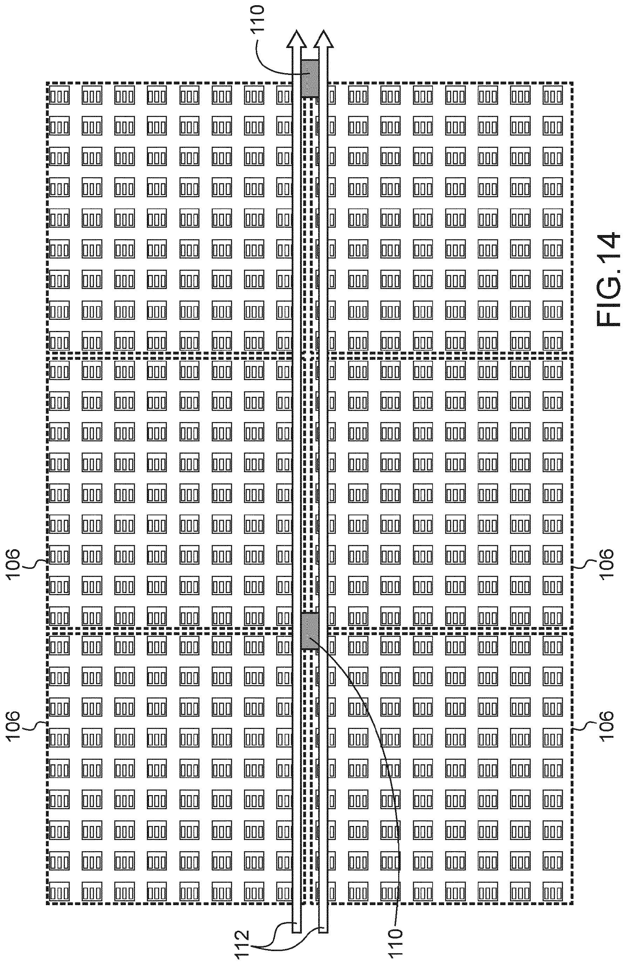

Dans les différents exemples de réalisation précédemment décrits, chaque circuit de contrôle 110 est associé à un bloc de pixels 106. En variante, il est possible qu'un unique circuit intégré, dit « macro circuit de contrôle » 180, comprenne plusieurs circuits de contrôle 110 associés à plusieurs blocs de pixels 106. Une telle variante est par exemple représentée sur la figure 14, sur laquelle chaque « macro » circuit de contrôle 180 est associé à quatre blocs de pixels 106. De plus, sur la configuration de la figure 14, chaque macro circuit de contrôle 180 est partagé entre deux lignes de blocs de pixels 106, ou autrement dit deux groupes de pixels, et le macro circuit de contrôle 180 est couplé à deux réseaux de distribution de données principaux 112 sur lesquels sont envoyées les données destinées aux blocs de pixels 106 couplés au macro circuit de contrôle 180. Une telle configuration a pour avantage de réduire le nombre de puces à reporter du dispositif d'affichage 100 (4 fois moins de puces pour l'exemple de la figure 14). Diverses organisations sont possibles, par exemple quatre circuits de contrôles 110 étant regroupés sur la même puce silicium, et partageant éventuellement des blocs de calcul ou de mémoire pour réaliser par exemple des traitements de données.

Dans tous les modes et exemples de réalisation précédemment décrits, il est possible que les tensions d'alimentation transmises aux éléments lumineux 130 aient une valeur supérieure à celle avec laquelle les éléments lumineux 130 sont destinés à fonctionner. Pour une puissance de valeur donnée à transmettre aux éléments lumineux 130, cela permet de transmettre cette puissance avec un courant moindre, ce qui va permettre au final de réduire les chutes de tension, et donc les pertes liées aux résistances d'accès. Dans une telle configuration, le dispositif 100 comporte des circuits réducteurs de tension 182 interposés entre la source d'alimentation électrique du dispositif 100 et les éléments lumineux 130 et qui permettent d'adapter la valeur de la tension reçue à celle souhaitée pour le fonctionnement des éléments lumineux 130.

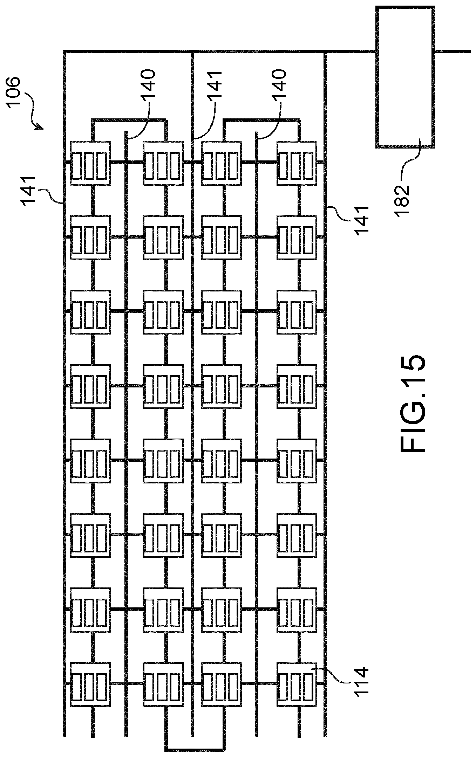

La figure 15 représente schématiquement une partie d'un bloc de pixels 106 dans lequel les lignes d'alimentation 141 reçoivent une tension ayant été abaissée par un circuit réducteur de tension 182.

De manière avantageuse, les circuits réducteurs de tension 182 peuvent être intégrés aux circuits de contrôle 110 ou aux macro circuits de contrôle, ce qui permet de ne pas augmenter le nombre de puces à reporter sur le support.

## Revendications

1. Dispositif d'affichage (100) comportant au moins :
- une matrice de pixels (102) comprenant plusieurs groupes de pixels (104), chaque groupe de pixels (104) comprenant plusieurs blocs de pixels (106) chacun incluant plusieurs pixels répartis sur plusieurs lignes de pixels voisines et sur plusieurs colonnes de pixels voisines, et chaque pixel comprenant au moins un élément lumineux (130) ;
- une carte vidéo (108) comprenant au moins une entrée (109) configurée pour recevoir un signal numérique à afficher par la matrice de pixels (102), et plusieurs sorties (111) chacune couplée à un groupe de pixels (104) par un réseau de distribution de données principal (112) associé, la carte vidéo (108) étant configurée pour décoder le signal numérique et envoyer sur chacune des sorties (111) des données numériques encodées dans un format adapté à la matrice de pixels et destinées à être affichées par le groupe de pixels (104) couplé à ladite sortie (111) ;
et dans lequel :
- chaque groupe de pixels (104) comporte plusieurs circuits de contrôle (110) chacun associé à un bloc de pixels (106) du groupe de pixels (104) et couplé au réseau de distribution de données principal (112) associé, chaque circuit de contrôle (110) comportant un circuit mémoire principal (126) configuré pour stocker une partie des données numériques destinée à être affichée par le bloc de pixels (106) associé et étant configuré pour envoyer au bloc de pixels (106) associé, par un réseau de distribution de données secondaire associé, ladite partie des données numériques destinée à être affichée par le bloc de pixels (106) associé ;
- chaque pixel comporte au moins un circuit de pilotage (138) configuré pour générer des signaux de commande du ou des éléments lumineux (130) du pixel à partir de données numériques destinées à être affichées par le ou les éléments lumineux (130) du pixel.

2. Dispositif d'affichage (100) selon la revendication 1, dans lequel chaque pixel correspond à un module (105) distinct des autres pixels et reporté sur un support (107) de la matrice de pixels (102) sur lequel se trouvent tout ou partie des réseaux de distribution de données principaux (112) et les circuits de contrôle (110).

3. Dispositif d'affichage (100) selon l'une des revendications précédentes, dans lequel chaque circuit de contrôle (110) comporte au moins un circuit de réception de données (124) configuré pour identifier la partie des données numériques destinée à être affichée par le bloc de pixels (106) auquel le circuit de contrôle (110) est associé, au moyen d'une adresse associée au circuit de réception de données, sur le réseau de distribution de données principal (112) associé comprenant un bus de données.

4. Dispositif d'affichage (100) selon l'une des revendications 1 ou 2, dans lequel, dans chaque groupe de pixels (104), les circuits de contrôle (110) comportent des registres à décalage principaux (166) couplés en série d'un circuit de contrôle (110) à l'autre et distincts des circuits mémoires principaux (126), le registre à décalage principal (166) d'un circuit de contrôle (110) étant configuré pour réceptionner, sur le réseau de distribution de données principal (112), la partie des données numériques destinée à être affichée par le bloc de pixels (106) auquel le circuit de contrôle (110) est associé.

5. Dispositif d'affichage (100) selon l'une des revendications précédentes, dans lequel chaque pixel comporte en outre un circuit mémoire secondaire (128) couplé au réseau de distribution de données secondaire associé, le circuit mémoire secondaire (128) étant configuré pour mémoriser les données numériques destinées à être affichées par le ou les éléments lumineux du pixel, le circuit (138) de pilotage du pixel comprenant une entrée couplée à une sortie du circuit mémoire secondaire (128) du pixel et au moins une sortie couplée à ou aux éléments lumineux (130) du pixel.

6. Dispositif d'affichage (100) selon la revendication 5, dans lequel, dans chaque bloc de pixels, les circuits mémoires secondaires (128) comportent des registres à décalage secondaires (132) couplés en série d'un pixel à l'autre et configurés pour faire transiter les données numériques destinées à être affichées par les pixels d'un même bloc d'un pixel à l'autre.

7. Dispositif d'affichage (100) selon la revendication 6, dans lequel, dans chaque pixel, chaque circuit mémoire secondaire (128) comporte en outre un verrou (134) comprenant au moins une entrée couplée à une sortie du registre à décalage secondaire (132) du circuit mémoire secondaire (128), et au moins une sortie couplée à l'entrée du circuit de pilotage (138) du pixel.

8. Dispositif d'affichage (100) selon la revendication 5, dans lequel :
- chaque pixel comporte au moins un circuit de décodage d'adresse secondaire (150) couplé au réseau de distribution de données secondaire associé, le circuit de décodage d'adresse secondaire (150) étant apte à identifier des données numériques destinées à être affichées par le pixel ;
- chaque bloc de pixels (106) comporte au moins une liaison de données secondaire (152) de type bus de données à laquelle au moins une entrée du circuit de décodage d'adresse secondaire (150) de chaque pixel du bloc de pixels (106) est couplée.

9. Dispositif d'affichage (100) selon la revendication 8, dans lequel chaque circuit mémoire secondaire (128) comporte :
- au moins un registre (154) comprenant au moins une entrée couplée à une sortie du circuit de décodage d'adresse secondaire (150) du pixel comprenant le circuit mémoire secondaire (128), et
- au moins un verrou (134) comprenant au moins une entrée couplée à une sortie du registre (154) du circuit mémoire secondaire (128), une sortie du verrou (134) étant couplée à une entrée du circuit (138) de pilotage du pixel comprenant le circuit mémoire secondaire (128).

10. Dispositif d'affichage (100) selon l'une des revendications précédentes, comportant en outre des circuits réducteurs de tension (182) configurés pour alimenter électriquement les pixels.

11. Dispositif d'affichage (100) selon l'une des revendications précédentes, dans lequel les circuits de pilotage (138) comportent des modulateurs PWM ou BCM, ou des convertisseurs numérique - analogique.

12. Dispositif d'affichage (100) selon l'une des revendications précédentes, dans lequel chaque circuit de contrôle (110) est formé par une puce distincte des pixels du bloc de pixels (106) auquel le circuit de contrôle (110) est associé, ou dans lequel chaque circuit de contrôle (110) est intégré dans un des pixels du bloc de pixels (106) auquel le circuit de contrôle (110) est associé.

13. Dispositif d'affichage (100) selon l'une des revendications précédentes, dans lequel la carte vidéo (108) et/ou les circuits de contrôle (110) et/ou les pixels comportent au moins un circuit de traitement numérique (156) des données.

14. Dispositif d'affichage (100) selon l'une des revendications précédentes, dans lequel au moins une partie des pixels comportent chacun au moins un photodétecteur (158) couplé à un convertisseur analogique - numérique (160).

15. Dispositif d'affichage (100) selon la revendication 14 et selon l'une des revendications 6 ou 7, dans lequel :
- dans chaque pixel, une sortie du convertisseur analogique - numérique (160) est couplée à une entrée du registre à décalage (132) du pixel ;
- dans chaque bloc de pixels (106), une sortie du registre à décalage (132) d'un des pixels du bloc de pixels (106) est couplée électriquement à une entrée du circuit de contrôle (110) associé au bloc de pixels (106).
